# EUROPEAN PATENT APPLICATION

(11) **EP 2 511 840 A1**
(43) Date of publication of application: **17.10.2012**
(21) Application number: 12163702.9
(22) Date of filing: 11.04.2012
(51) Int. Cl.: G06F 17/30

(54) **Apparatus, method and medium for implementing web access rules**

(30) Priority: 15.04.2011 JP 2011090762
(71) Applicant: Konica Minolta Business Technologies, Inc., Chiyoda-ku Tokyo 100-0005 (JP)
(72) Inventor: Kano, Takahiro, Tokyo, 100-0005 (JP)
(74) Representative: HOFFMANN EITLE

(57) **Abstract**

An image forming apparatus includes one or more browsing portions to receive a content from a server connected to a network and to display the received content; a command acquisition portion to acquire a command output by each of the one or more browsing portions to be transmitted to a server; a transmission portion to transmit the acquired command to a server that is a transmission destination of the command; and a restriction portion to restrict transmission of the command by the transmission portion based on a status of contents previously received from the server to which the acquired command is transmitted, or a status of communication with the server.

## Description

### BACKGROUND OF THE INVENTION

### Field of the Invention

The present invention relates to an image forming apparatus, a communication control method, a recording medium encoded with a communication control program, a browsing method, and a recording medium encoded with a browsing program. More specifically, the present invention relates to an image forming apparatus receiving data from a Web server over a network, a communication control method executed in the image forming apparatus, a recording medium encoded with a communication control program, a browsing method, and a recording medium encoded with a browsing program.

### Description of the Related Art

Web browsers are widely known to access a Web server on a network to receive and display contents stored in the Web server. A plurality of Web browsers can be activated at the same time to display a plurality of Web pages. A Web page can be displayed on each of a plurality of tabs in one Web browser. Therefore, a plurality of Web pages can be downloaded from one Web server. Furthermore, some Web pages have a function of periodically accessing a Web server to update the Web page.

On the other hand, when receiving a plurality of requests from one computer, a Web server transmits a Web page corresponding to each of the plurality of requests and performs a process corresponding to the request. Therefore, when requests are concentrated, load may be increased.

As a technique of restricting access to a Web page, Japanese Laid-Open Patent No. 2006-192878 discloses an information processing method in a browser which is executed in an image forming apparatus connected to be able to communicate with a network for receiving and displaying contents from the network. The method includes an initial display step of displaying information about a content permitted to be displayed by the browser at a time of startup, a detection step of detecting whether link information to another content that is included in the content permitted to be displayed by the browser is selected, and a step of permitting access to another content if it is detected that the link information to another content is selected in the detection step, and if the link information to another content is in the same domain or in the same site as the content displayed by the browser.

The conventional information processing method displays only the content permitted to be displayed by the browser. Therefore, although access to the not-permitted contents can be restricted, load on the Web server which stores the permitted contents cannot be reduced.

### SUMMARY OF THE INVENTION

The present invention has been accomplished in view of the foregoing problem, and an object of the present invention is to provide an image forming apparatus capable of reducing load on a server.

Another object of the present invention is to provide a communication control method capable of reducing load on a server, and a recording medium encoded with a communication control program capable of reducing load on a server.

According to an aspect of the present invention, an image forming apparatus includes: one or more browsing means to receive a content from a server connected to a network and to display the received content; a command acquisition means to acquire a command output by each of the one or more browsing means to be transmitted to a server; a transmission means to transmit the acquired command to a server that is a transmission destination of the command; and a restriction means to restrict transmission of the command by the transmission means, based on a status of contents previously received from the server to which the acquired command is transmitted, or a status of communication with the server.

According to this aspect, transmission of a command is restricted based on a status of contents previously received from a server connected to a network, or a status of communication with said server. Therefore, it is possible to provide an image forming apparatus capable of reducing load on the server.

Preferably, an image forming apparatus further includes an association means to associate server identification information for identifying a server that is a transmission source with each of one or more contents previously received from a server and held in a displayable manner by each of said one or more browsing means, wherein said restriction means includes a first request prohibition means to prohibit transmission of a command by said transmission means, if the number of contents associated by said association means with the same server identification information as the server identification information of the server that is a transmission destination of said acquired command is equal to a prescribed threshold value at a moment when said command is acquired by said acquisition means.

Preferably, the transmission means further includes a session establishing means to establish a session for communicating with a server that is a transmission destination of the acquired command, and the restriction means includes a second request prohibition means to prohibit transmission of a command by the transmission means, if a session for communicating with a server that is a transmission destination of the acquired command has already been established at a moment when the command is acquired by the acquisition means.

Preferably, each of the one or more browsing means includes a request accepting means to accept a request, a command output means to output, in response to the request being accepted, a command corresponding to the accepted request to a server that is a transmission destination defined by the accepted request, a content receiving means to receive a content returned by the server executing the output command, and a content display means to display the received content, the content display means includes a holding means to hold one or more contents received by the content receiving means in a state in which the one or more contents can be selected, and a selection display means to display one selected from the held one or more contents, and the request accepting means includes a generation request accepting means to accept a request generated by one of the one or more contents held by the holding means.

Preferably, each of the one or more browsing means includes a request accepting means to accept a request, a command output means to output, in response to the request being accepted, a command corresponding to the accepted request to a server that is a transmission destination defined by the accepted request, a content receiving means to receive a content returned by the server executing the output command, and a content display means to display the received content, and the request accepting means includes an instruction accepting means to accept a request according to an instruction by a user.

In accordance with another aspect of the present invention, an image forming apparatus includes: a request accepting means to accept a request; a command transmission means to transmit, in response to the request being accepted, a command corresponding to the accepted request to a server that is a transmission destination defined by the accepted request; a content receiving means to receive a content returned by the server executing the command; a content display means to display the received content; and a restriction means to restrict transmission of the command by the command transmission means, based on a status of contents previously received from the server that is a transmission destination defined by the accepted request, or a status of communication with the server.

According to this aspect, transmission of a command is restricted based on a status of contents previously received from a server, or a status of communication with the server. Therefore, it is possible to provide an image forming apparatus capable of reducing load on the server.

Preferably, the content display means includes a holding means to hold one or more contents received by the content receiving means in a state in which the one or more contents can be selected, and a selection display means to display one selected from the held one or more contents, and the restriction means includes a first request prohibition means to prohibit transmission of the command by the command transmission means, if, at a moment when a request is accepted by the request accepting means, the number of contents received from the same server as a server that is a transmission destination defined by the accepted request, of the one or more contents held by the holding means, is equal to a prescribed threshold value.

Preferably, the restriction means includes a second request prohibition means to prohibit transmission of the command by the command transmission means, if, at a moment when a request is accepted by the request accepting means, a session for communicating with a server that is a transmission destination of the accepted request has already been established.

Preferably, the request accepting means includes a generation request accepting means to accept a request generated by one of the one or more contents held by the holding means.

Preferably, the request accepting means includes an instruction accepting means to accept a request according to an instruction by a user.

In accordance with a further aspect of the present invention, a communication control method executed in an image forming apparatus capable of executing a browsing program includes the steps of: acquiring a command output by a task executing the browsing program to be transmitted to a server connected to a network; transmitting the acquired command to a server that is a transmission destination of the command; and restricting transmission of the acquired command in the step of transmitting, based on a status of contents previously received from the server to which the acquired command is transmitted, or a status of communication with the server.

According to this aspect, transmission of a command is restricted based on a status of contents previously received from a server, or a status of communication with the server. Therefore, it is possible to provide a communication control method capable of reducing load on the server.

In accordance with yet another aspect of the present invention, a computer-readable recording medium is encoded with a communication control program executed in a computer which controls an image forming apparatus. The communication control program causes the computer to execute the steps of: acquiring a command output by a task executing a browsing program to be transmitted to a server connected to a network; transmitting the acquired command to a server that is a transmission destination of the command; and restricting transmission of the acquired command in the step of transmitting, based on a status of contents previously received from the server to which the acquired command is transmitted, or a status of communication with the server.

According to this aspect, transmission of a command is restricted based on a status of contents previously received from a server, or a status of communication with the server. Therefore, it is possible to provide a recording medium encoded with a communication control program capable of reducing load on the server.

In accordance with still another aspect of the present invention, a browsing method executed in an image forming apparatus connected to a network includes the steps of: accepting a request; in response to the request being accepted, transmitting a command corresponding to the accepted request to a server that is a transmission destination defined by the accepted request; receiving a content returned by the server executing the command; displaying the received content; and restricting transmission of the command in the step of transmitting a command, based on a status of contents previously received from the server that is a transmission destination defined by the accepted request, or a status of communication with the server.

According to this aspect, transmission of a command is restricted based on a status of contents previously received from a server, or a status of communication with the server. Therefore, it is possible to provide a browsing method capable of reducing load on the server.

In accordance with a still further aspect of the present invention, a computer-readable recording medium is encoded with a browsing program executed in a computer which controls an image forming apparatus connected to a network. The browsing program causes the computer to execute the steps of: accepting a request; in response to the request being accepted, transmitting a command corresponding to the accepted request to a server that is a transmission destination defined by the accepted request; receiving a content returned by the server executing the command; displaying the received content; and restricting transmission of the command in the step of transmitting a command, based on a status of contents previously received from the server that is a transmission destination defined by the accepted request, or a status of communication with the server.

According to this aspect, transmission of a command is restricted based on a status of contents previously received from a server, or a status of communication with the server. Therefore, it is possible to provide a recording medium encoded with a browsing program capable of reducing load on the server.

The foregoing and other features, aspects, and advantages of the present invention will become more apparent from the following detailed description of the present invention when taken in conjunction with the accompanying drawings.

### BRIEF DESCRIPTION OF THE DRAWINGS

Fig. 1 is a diagram showing an overview of an information processing system in an embodiment of the present invention.
Fig. 2 is a perspective view showing an external view of an MFP.
Fig. 3 is a block diagram showing an exemplary hardware configuration of the MFP.
Fig. 4 is a plan view showing an exemplary operation panel.
Fig. 5 is a block diagram showing an overall function of a CPU of the MFP and information stored in an EEPROM.
Fig. 6 is a block diagram showing an example of detailed functions of the n-th browsing portion 51-n.
Fig. 7 is a diagram showing an example of a management table.
Fig. 8 is a flowchart showing an exemplary flow of a browsing process.
Fig. 9 is a flowchart showing an exemplary flow of a communication control process.
Fig. 10 is a first diagram showing an example of user's operations and a flow of processing.
Fig. 11 is a second diagram showing an example of user's operations and a flow of processing.
Fig. 12 is a block diagram showing an overall function of the CPU of the MFP and information stored in the EEPROM in a second embodiment.
Fig. 13 is a flowchart showing an exemplary flow of a browsing process in the second embodiment.
Fig. 14 is a flowchart showing an exemplary flow of a request determination process.

### DESCRIPTION OF THE PREFERRED EMBODIMENTS

In the following, embodiments of the present invention will be described with reference to the figures. In the following description, the same parts are denoted with the same reference numerals. Their names and functions are also the same. Therefore, a detailed description thereof will not be repeated.

### <First Embodiment>

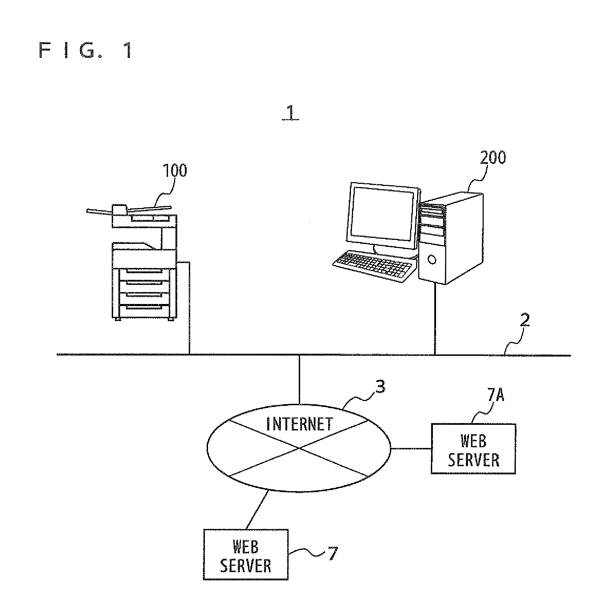

Fig. 1 is a diagram showing an overview of an information processing system in an embodiment of the present invention. Referring to Fig. 1, an information processing system 1 includes a Multi-Function Peripheral (hereinafter referred to as "MFP") 100 and a PC 200, each being connected to a network 2, and Web servers 7, 7A connected to the Internet 3. MFP 100 is an example of image forming apparatus and has a plurality of functions such as a scanner function, a printer function, a copy function, and a facsimile function.

Network 2 is a Local Area Network (LAN) and is connected to the Internet 3 through a gateway. Therefore, MFP 100 can communication with Web servers 7, 7A connected to the Internet 3. The communication between MFP 100 and Web servers 7, 7A uses HTTP (Hyper Text Transfer Protocol), though not being limited thereto. Network 2 is not limited to a LAN but may be the Internet, a Wide Area Network (WAN), or a Public Switched Telephone Network.

MFP 100 is installed with a browsing program and has a browser function by executing the browsing program. For example, when a URL (Uniform Resource Locator) of a Web page stored in Web server 7 is designated by the user, MFP 100 transmits a request to Web server 7 to ask for transmission of the Web page specified by the URL and receives and displays the Web page transmitted by Web server 7 in response to the request. Here, the Web page is text data written in a markup language such as HTML (Hyper Text Markup Language) or XML (Extensible Markup Language). A process of MFP 100 downloading and displaying a Web page is hereinafter referred to as a browsing process.

Web servers 7, 7A each transmit a Web page to MFP 100 in response to a request transmitted from MFP 100 having the browser function. Web servers 7, 7A each have CGI (Common Gateway Interface) and activate an application program in response to a request from MFP 100 having the browser function. For example, when functioning as a file server, Web servers 7, 7A each receive data transmitted by MFP 100 and activate an application program to store the received data in response to a request from MFP 100.

In the present embodiment, MFP 100 is described as an example of image forming apparatus. However, MFP 100 may be replaced by an information processing apparatus, for example, a personal computer, a scanner, a printer, or a facsimile as long as the apparatus has the browser function. Web servers 7, 7A may be present in an intranet, as a matter of course. MFP 100 serving as an image forming apparatus may additionally have the function of a Web server.

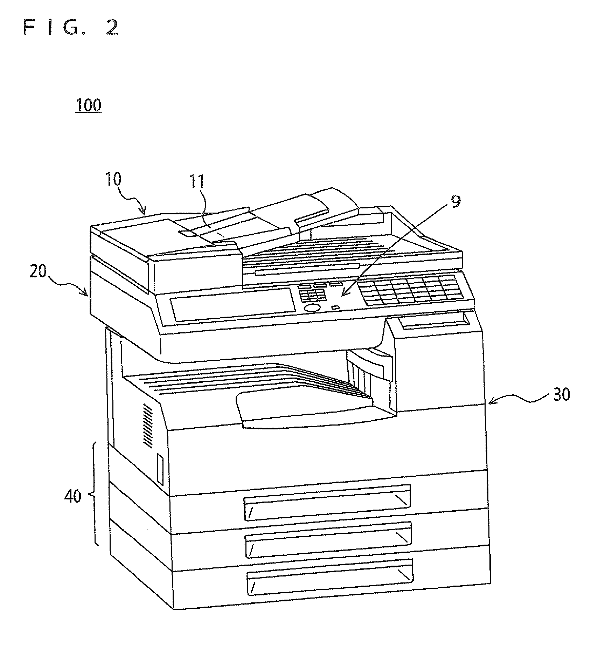

Fig. 2 is a perspective view showing an external view of the MFP. Referring to Fig. 2, MFP 100 includes an operation panel 9, an Automatic Document Feeder (ADF) 10, a document scanning unit 20, an image forming unit 30, and a paper feeding unit 40.

ADF 10 automatically conveys plural pages of a document set on a document feed tray 11 one by one to a prescribed document scanning position set on a platen glass of document scanning unit 20 and discharges the document having original images scanned by document scanning unit 20 onto a document output tray. Document scanning unit 20 includes a light source for applying light to a document conveyed to the document scanning position and an optical transducer element receiving light reflected at the document to scan a document image according to the size of the document. The optical transducer element transduces the received light into image data as an electrical signal for storage into a memory or for output to image forming unit 30.

Image forming unit 30 forms an image by a well-known electrophotographic technique. Image forming unit 30 performs a variety of data processing such as shading correction on the image data input from document scanning unit 20 and forms an image on a sheet of paper conveyed by paper feeding unit 40 based on the processed image data. Paper feeding unit 40 conveys paper accommodated in a paper feed tray to image forming unit 30.

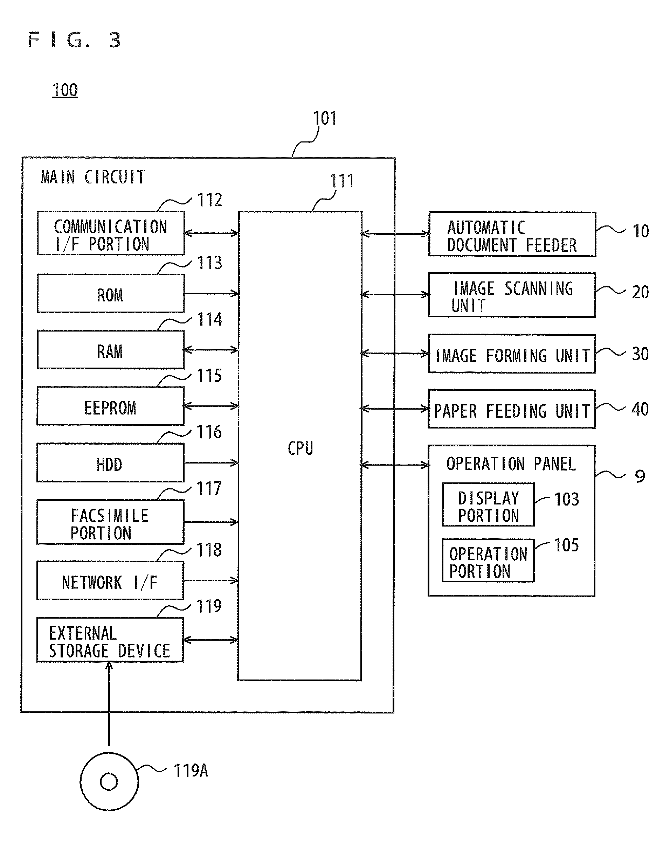

Fig. 3 is a block diagram showing an exemplary hardware configuration of the MFP. Referring to Fig. 3, MFP 100 includes a main circuit 101, ADF 10, image scanning unit 20, image forming unit 30, paper-feeding unit 40, and operation panel 9 serving as a user interface.

Main circuit 101 includes a CPU 111, a communication interface (I/F) portion 112, a ROM (Read Only Memory) 113, a RAM (Random Access Memory) 114, an EEPROM. (Electronically Erasable and Programmable ROM) 115, a hard disk driver (HDD) 116 serving as mass storage device, a facsimile portion 117, a network I/F 118, and an external storage device 119 to which a CD-ROM 119A is attached. CPU 111 is connected to ADF 10, document scanning unit 20, image forming unit 30, paper feeding unit 40, and operation panel 9 to control MFP 100 on the whole.

ROM 113 stores a program executed by CPU 111 and data necessary to execute the program. RAM 114 is used as a work area for CPU 111 to execute a program.

Communication I/F portion 112 is an interface for connecting MFP 100 to another device through a serial communication cable. The connection may be either wired or wireless.

Facsimile portion 117 is connected to a Public Switched Telephone Network (PSTN) to transmit facsimile data to the PSTN or receive facsimile data from the PSTN. Facsimile portion 117 stores the received facsimile data into HDD 116 or outputs the same to image forming unit 30. Image forming unit 30 prints the facsimile data received by facsimile portion 117 on paper. Facsimile portion 117 converts the data stored in HDD 116 into facsimile data for transmission to a facsimile machine connected to the PSTN.

Network I/F 118 is an interface for connecting MFP 100 to network 2. CPU 111 can communication with PC 200 and Web servers 7, 7A connected to the Internet 3 through network I/F 118.

CD-ROM 119A is attached to external storage device 119. CPU 111 can access CD-ROM 119A through external storage device 119 and can load a program stored in CD-ROM 119A into RAM 114 for execution. The program executed by CPU 111 is not limited to a program stored in CD-ROM 119A but may be a program stored in another storage medium or a program stored in HDD 116 or a program written into HDD 116 by another computer connected to network 2 through network I/F 118.

A recording medium for storing a program is not limited to CD-ROM 119A and may be an optical disk (MO (Magnetic Optical Disc)/(MD (Mini Disc)/DVD (Digital Versatile Disc)), an IC card, an optical card, or a semiconductor memory such as a mask ROM, an EPROM (Erasable Programmable ROM), or an EEPROM (Electrically Erasable and Programmable ROM).

The program referred to herein includes not only a program directly executable by CPU 111 but also a source program, a compressed program, and an encrypted program.

Operation panel 9 is provided on a top surface of MFP 100 and includes a display portion 103 and an operation portion 105. Display portion 103 is a display such as a liquid crystal display or an organic ELD (Electroluminescence Display) and displays instruction menus to users, information about the obtained display data, and the like. Operation portion 105 accepts a user's operation and outputs the accepted operation to CPU 111.

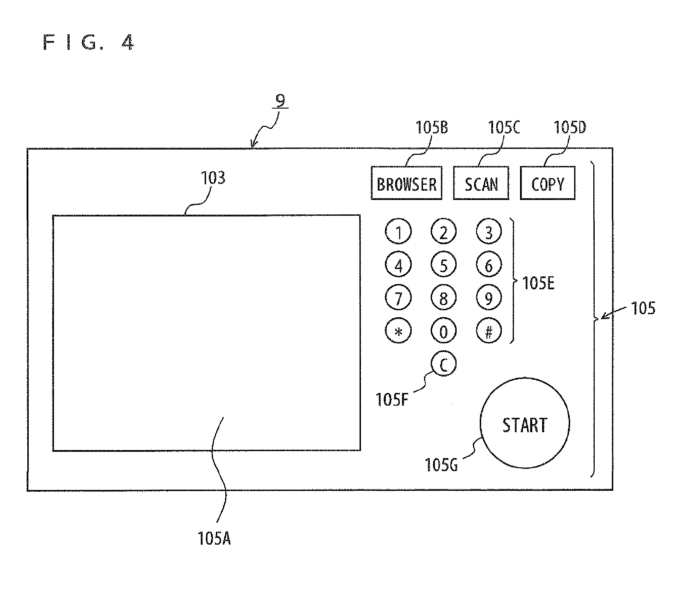

Fig. 4 is a plan view showing an exemplary operation panel. Referring to Fig. 4, operation portion 105 includes a touch panel 105A arranged superimposed on display portion 103, a browser key 105B to which an operation to instruct to execute a browsing process is allotted, a scan key 105C to which an operation to instruct to execute a scan process is allotted, a copy key 105D to which an operation to instruct to execute a copy process is allotted, a ten-key pad 105E, a clear key 105F for cancelling an input content, and a start key 105G. Touch panel 105A is formed of a transparent member and is arranged to be superimposed on display portion 103. When the user touches touch panel 105A by the finger, touch panel 105A detects the touched position as a designated position for output to CPU 111.

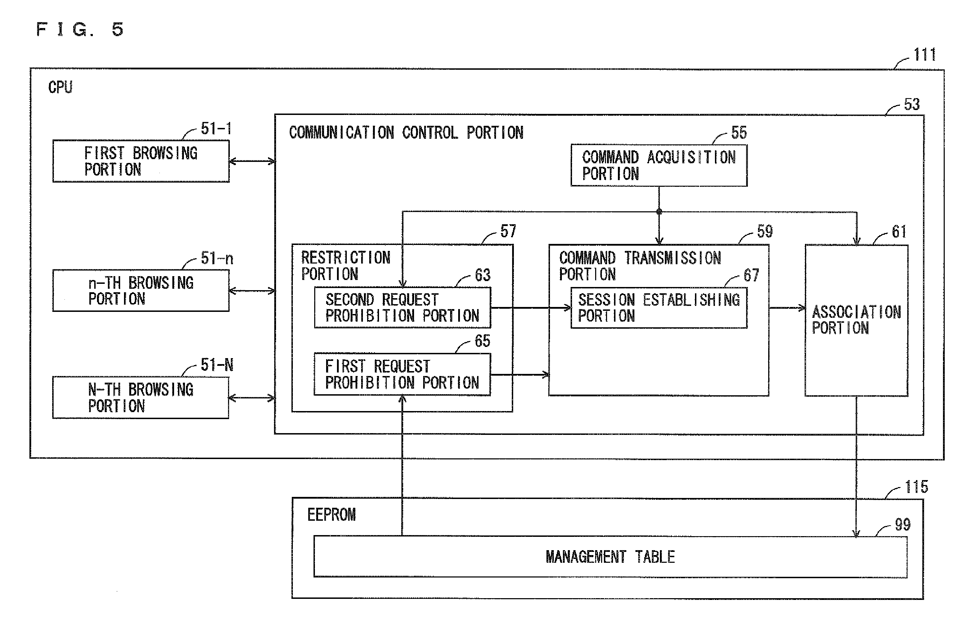

Fig. 5 is a block diagram showing an overall function of the CPU of the MFP and information stored in the EEPROM. The function of CPU 111 shown in Fig. 5 is implemented by CPU 111 executing a browsing program and a communication control program stored in ROM 113, EEPROM 115, HDD 116, or CD-ROM 119A.

Referring to Fig. 5, CPU 111 includes the first to N-th browsing portions 51-1 to 51-N (where N is an integer equal to or greater than two), and a communication control portion 53 for controlling network I/F 118. EEPROM 115 stores a management table 99.

The first to N-th browsing portions 51-1 to 51-N each are a task formed in CPU 111 when CPU 111 executes the browsing program. CPU 111 can execute a plurality of browsing programs, and the same number of tasks as the browsing programs executed by CPU 111 are formed in CPU 111.

CPU 111 executes a browsing program in response to the user designating browser key 105B in operation portion 105. Therefore, CPU 111 generates the same number of tasks as the number of times the user designates browser key 105B. When link information of a Web page is designated by the user, CPU 111 generates a new task. For example, when the user designates link information included in a first Web page displayed by the first browsing portion 51-1, and when a command to open a new window is assigned to the link information, CPU 111 generates a new task, for example, the second browsing portion 51-2 by executing a browsing program, and the second browsing portion 51-2 displays a second Web page linked by the link information included in the first Web page.

Each of the first to N-th browsing portions 51-1 to 51-N can hold a Web page with each of a plurality of tabs and displays the names of the plurality of tabs and one Web page. Each browsing portion displays a Web page held by the tab having the name designated by the user, among a plurality of tab names. When link information included in the displayed Web page is designated by the user, each of the first to N-th browsing portions 51-1 to 51-N generates a new tab, holds a new Web page with the new tab, and displays the held Web page. For example, when the user designates link information included in a third Web page displayed by the first browsing portion 51-1, and when a command to open a new tab is assigned to the link information, the first browsing portion 51-1 generates a new tab, holds a fourth Web page linked by the link information, and displays the held Web page.

Fig. 5 shows a case where the first to N-th browsing portions 51-1 to 51-N are generated. Here, any one of the first to N-th browsing portions 51-1 to 51-N is referred to as the n-th browsing portion 51-n (where n is a positive integer equal to or smaller than N).

Task identification information for identifying a task is assigned to the n-th browsing portion 51-n by CPU 111. When the user operates operation portion 105 to input an operation to designate the n-th browsing portion 51-n and an instruction to end, the n-th browsing portion 51-n terminates execution of the browsing program.

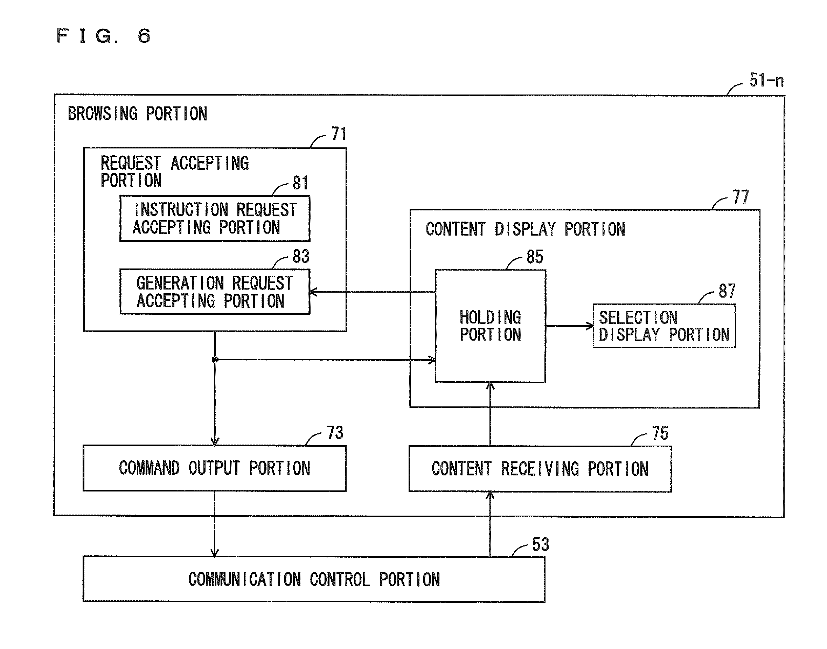

The n-th browsing portion 51-n executes a browsing process. Fig. 6 is a block diagram showing an example of detailed functions of the n-th browsing portion 51-n. Referring to Fig. 6, the n-th browsing portion 51-n includes a request accepting portion 71 for accepting a request to the server, a command output portion 73 outputting a command corresponding to the accepted request, a content receiving portion 75 for receiving a content returned by the server that receives the request, and a content display portion 77 for displaying the received content.

Request accepting portion 71 accepts a request and outputs the accepted request to command output portion 73 and content display portion 77. Request accepting portion 71 includes an instruction request accepting portion 81 and a generation request accepting portion 83. Instruction request accepting portion 81 accepts a request based on the operation input to operation portion 105 by the user. When the user inputs a URL to operation portion 105, instruction request accepting portion 81 accepts a request to access the input URL. When the user inputs an operation to designate link information to operation portion 105, instruction request accepting portion 81 accepts a request to access the URL included in the designated link information. Specifically, when the user designates a portion in which link information is displayed in a Web page while the Web page is being displayed on display portion 103 by content display portion 77 described later, instruction request accepting portion 81 accepts an operation to designate the link information, based on the position detected by touch panel 105A of operation portion 105.

Instruction request accepting portion 81 outputs an instruction to switch tabs together with a request to content display portion 77. When the user inputs an operation to designate link information to operation portion 105, and if a command to open a new tab is assigned to the designated link information, instruction request accepting portion 81 outputs an switch instruction to open a new tab, together with a request to access the URL included in the designated link information.

Generation request accepting portion 83 accepts a request output by the task generated by CPU 111 executing a program included in a Web page. CPU 111 executes a program included in a Web page held by a holding portion 85 included in content display portion 77 described later. The program included in a Web page is written, for example, in JAVA (R) or JAVA (R) script and includes a command to periodically transmit a request to ask for transmission of a new Web page for periodically updating a Web page.

In response to a request input from request accepting portion 71, command output portion 73 outputs, to communication control portion 53, a command corresponding to the request directed to a server that is a transmission destination determined by the input request. The request includes a URL, which is a network address of the server, and a command to ask the server for execution. The command to ask the server for execution includes a CGI (Common Gateway Interface) command. In a case of asking the server to transmit a Web page, the request includes a URL (Uniform Resource Locator) which is a network address of that Web page.

Communication control portion 53, which will be detailed later, transmits a command input from command output portion 73 to Web servers 7, 7A, receives a content returned by Web servers 7, 7A executing the command, and outputs the received content to content receiving portion 75.

Content receiving portion 75 outputs the content input from communication control portion 53 to content display portion 77. Content display portion 77 receives a request from request accepting portion 71 and receives a content from content receiving portion 75. Content display portion 77 may also receive a switch instruction to open a new tab from request accepting portion 71. Content display portion 77 includes holding portion 85 and a select display portion 87. Holding portion 85 stores the content input from content receiving portion 75 into RAM 114 in association with the name of the tab. Holding portion 85 can store a plurality of contents into RAM 114. In this case, a plurality of contents each can be associated with the name of a tab.

When a switch instruction to open a new tab is input from request accepting portion 71, holding portion 85 generates a new tab. Specifically, the content input from content receiving portion 75 is stored into RAM 114 in association with the name of the new tab. When a switch instruction to open a new tab is not input from request accepting portion 71, holding portion 85 updates the content stored in RAM 114 in association with the name of the tab selected by select display portion 87 described later, with a content input from content receiving portion 75.

Some of the plurality of contents include a program such as JAVA (R) program and JAVA (R) script. This program is executed by CPU 111, and CPU 111 generates a request. The request generated by CPU 111 executing the program is input to generation request accepting portion 83.

Select display portion 87 selects one of one or more contents stored in RAM 114 and displays the selected content on display portion 103. Select display portion 87 also displays the names of the tabs, each associated with each of one or more contents stored in RAM 114, in a selectable manner on display portion 103. When the user inputs to operation portion 105 an instruction to select one of the names of one or more tabs displayed on display portion 103, select display portion 87 accepts the instruction to select, reads the content associated with the name of the selected tag from RAM 114, and displays the read content on display portion 103.

Returning to Fig. 5, communication control portion 53 includes a command acquisition portion 55 for acquiring a command, a command transmission portion 59 for transmitting the acquired command, a restriction portion 57 for restricting transmission of a command by command transmission portion 59, and an association portion 61.

Command acquisition portion 55 acquires a command output by one of the first to N-th browsing portions 51-1 to 51-N for transmission to one of servers 7, 7A. When acquiring a command, command acquisition portion 55 acquires, from the browsing portion that outputs the acquired command among the first to N-th browsing portions 51-1 to 51-N, task identification information for identifying that browsing portion and tab identification information for identifying a tab set as a process target by that browsing portion to display a Web page. Command acquisition portion 55 outputs the acquired command to command transmission portion 59 and restriction portion 57 and outputs a set of the task identification information and the tab identification information, and the command to association portion 61.

Command transmission portion 59 includes a session establishing portion 67. Session establishing portion 67 establishes a session for communicating with a server that is a transmission destination of the command input from command acquisition portion 55, on condition that a session prohibition signal is not input from restriction portion 57 described later. Specifically, when the session prohibition signal is not input from restriction portion 57, session establishing portion 67 specifies one of Web servers 7, 7A connected to the Internet 3 based on the URL included in the command input from command acquisition portion 55 and controls communication I/F portion 112 to establish a session for communicating with the specified Web server of Web servers 7, 7A. While the session is being established, session establishing portion 67 outputs a session number to association portion 61. The session is established in a period from when MFP 100 transmits a command to one of Web servers 7, 7A to when MFP 100 receives a content as a result of execution of the command from the Web server receiving the command, of Web servers 7, 7A.

In the description given here, when the first browsing portion 51-1 outputs a command including the URL of Web server 7, command transmission portion 59 acquires that command. In a case where two application tasks communicate with each other, here, the first browsing portion 51-1 and a task generated by Web server 7 executing an application program for providing a service communicate with each other, a session number is shared to identify the other side of communication. The establishment of a session refers to a state in which two tasks share a session number and are ready for communication using the session number. Well-known techniques may be used as the technique for establishing a session, and a detailed description will not be repeated here.

Command transmission portion 59 transmits the command input from command acquisition portion 55 to Web server 7 serving as a transmission destination, on condition that a session prohibition signal or a transmission prohibition signal is not input from restriction portion 57 described below. Specifically, command transmission portion 59 transmits the command to Web server 7 through communication I/F portion 112 during a session established by session establishing portion 67.

When the transmission prohibition signal is input from restriction portion 57, command transmission portion 59 outputs an error page to the browsing portion that outputs the command acquired by command acquisition portion 55, among the first to N-th browsing portions 51-1 to 51-N, in place of Web server 7 that is a transmission destination specified by the URL defined by the command input from command acquisition portion 55. When the session prohibition signal is input from restriction portion 57, command transmission portion 59 discards the command input from command acquisition portion 55. The error page may be output to the browsing portion that outputs the command acquired by command acquisition portion 55, among the first to N-th browsing portions 51-1 to 51-N.

When the session prohibition signal or the transmission prohibition signal is input from restriction portion 57, the command is not transmitted. Therefore, it is possible to reduce load on Web server 7 that is a transmission destination specified by the URL defined by the command input from command acquisition portion 55.

Restriction portion 57 receives a command from command acquisition portion 55. Restriction portion 57 includes a first request prohibition portion 65 and a second request prohibition portion 63. Second request prohibition portion 63 prohibits command transmission portion 59 from transmitting a command to Web server 7, based on the status of communication with Web server 7 that is a transmission destination of the command input from command acquisition portion 55, at a moment when the command is input from command acquisition portion 55. Specifically, when a session for communicating with Web server 7 that is a transmission destination of the command input from command acquisition portion 55 has already been established, second request prohibition portion 63 prohibits command transmission portion 59 from transmitting the command to Web server 7. When a session for communicating with Web server 7 that is a transmission destination of the command input from command acquisition portion 55 is not established, second request prohibition portion 63 does not prohibit command transmission portion 59 from transmitting the command to Web server 7. When prohibiting transmission of the command, second request prohibition portion 63 outputs a session prohibition signal to session establishing portion 67.

Association portion 61 associates server identification information for identifying the Web server serving as a transmission source of a content, of Web servers 7, 7A, with each of one or more contents previously received from one of Web servers 7, 7A and held in a displayable manner by the first to N-th browsing portions 51-1 to 51-N. Association portion 61 receives a set of task identification information and tab identification information and a command from command acquisition portion 55 and receives a session number from session establishing portion 67. When receiving a session number from session establishing portion 67, association portion 61 generates a management record, which includes the set of task identification information and tab identification information input from command acquisition portion 55, the URL of the sever included in the command, and the session number, and additionally stores the generated management record into management table 99 stored in EEPROM 115.

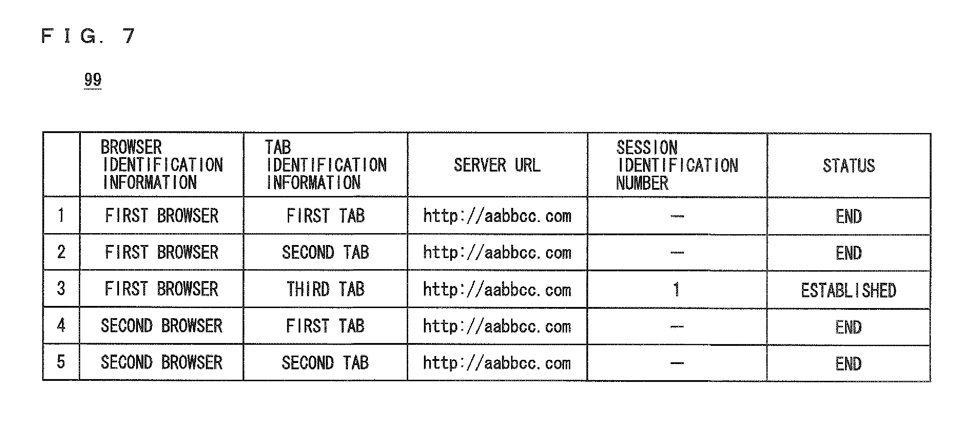

Fig. 7 is a diagram showing an example of the management table. Referring to Fig. 7, management table 99 includes five management records. The management record includes items of browser identification information, tab identification information, server URL, session identification number, and status. In the item of browser identification information, task identification information for identifying one of tasks, the first to N-th browsing portions 51-1 to 51-N, is set. In the item of tab identification information, tab identification information for identifying a tab set as a process target is set. In the item of server URL, the URL for identifying the Web server that is the other side of communication is set. In the item of session identification number, a session number for identifying a session established for communication with the Web server as the other side of communication is set. In the item of status, a status of a session is set. The status of a session includes "established" indicating that the session is being established and "end" indicating that the session has been terminated. Here, the browser identification information for identifying the tasks of the first to N-th browsing portions 51-1 to 51-N is referred to as the first to N-th browsers, respectively.

In management table 99 shown in Fig. 7, it is shown that a Web page downloaded from Web server 7 having the URL "aabbcc.com" is displayed in each of three tabs having the tab identification information "first tab," "second tab," and "third tab" in the first browsing portion 51-1 having the task identification information "first browser." It is shown that in the tab having the tab identification information "third tab," the session is being established and a Web page is being downloaded from Web server 7 with the URL "aabbcc.com."

It is also shown that a Web page downloaded from Web server 7 with the URL "aabbcc.com" is displayed in each of two tabs having the tab identification information "first tab" and "second tab" in the second browsing portion 51-2 having the task identification information "second browser."

Returning to Fig. 5, when a session number is input from session establishing portion 67, association portion 61 generates a management record with the item of status "established" and additionally stores the generated management record into management table 99. When a session number input from session establishing portion 67 is no longer input, association portion 61 rewrites the item of status in the management record with "end." Furthermore, when one of the first to N-th browsing portions 51-1 to 51-N, for example, the first browsing portion 51-1 closes a tab, association portion 61 acquires the task identification information and the tab identification information of the closed tab from the first browsing portion 51-1 and deletes from management table 99 the management record that includes the acquired task identification information and tab identification information, among the management records included in management table 99.

First request prohibition portion 65 in restriction portion 57 prohibits command transmission portion 59 from transmitting a command to the Web server, if the number of contents that are downloaded from the same Web server as the Web server that is a transmission destination of the acquired command, of Web servers 7, 7A, and are displayed by one of the first to N-th browsing portion 51-1 to 51-N reaches a prescribed threshold value, at a moment when the command is acquired by command acquisition portion 55. Here, the prescribed threshold value is "6." Specifically, first request prohibition portion 65 refers to management table 99 stored in EEPROM 115, and if the number of management records, in which the same URL as the URL of the Web server that is the transmission destination of the input command is set in the item "server URL," is the prescribed threshold value "6" at the moment when the command is input from command acquisition portion 55, first request prohibition portion 65 prohibits command transmission portion 59 from transmitting the command to the server. If the number of management records, in which the same URL as the URL of the Web server that is the transmission destination of the input command is set in the item "server URL," is smaller than the prescribed threshold value "6" at the moment when the command is input from command acquisition portion 55, first request prohibition portion 65 does not prohibit command transmission portion 59 from transmitting the command to the Web server. When prohibiting transmission of the command, first request prohibition portion 65 outputs a transmission prohibition signal to command transmission portion 59.

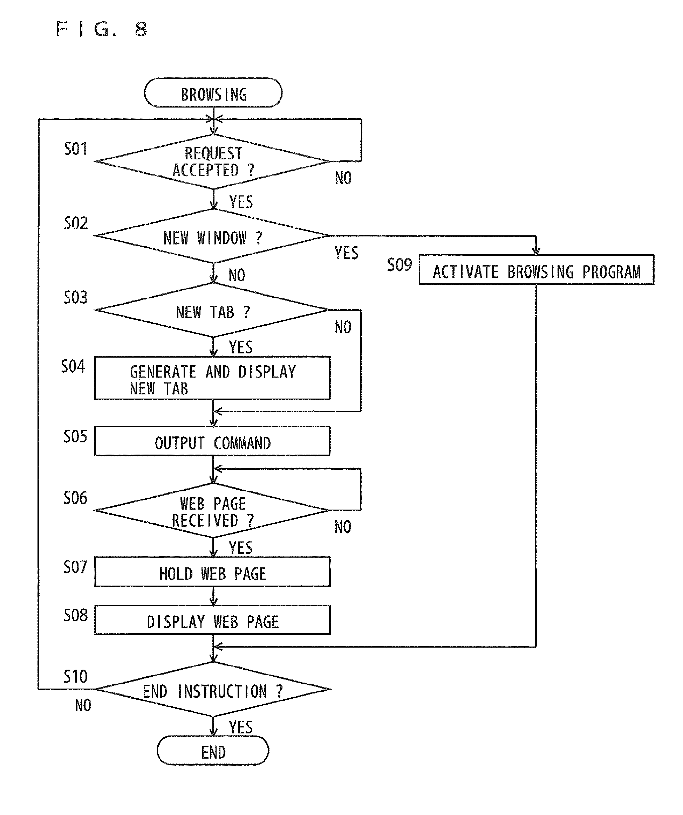

Fig. 8 is a flowchart showing an exemplary flow of the browsing process. The browsing process is a process executed by CPU 111 when CPU 111 of MFP 100 executes the browsing program stored in ROM 113, EEPROM 115, HDD 116, or CD-ROM 119A.

Referring to Fig. 8, CPU 111 determines whether a request is accepted (step S01). The process waits until a request is accepted (NO in step S01). If a request is accepted (YES in step S01), the process proceeds to step S02. It is determined whether a request based on an operation input to operation portion 105 by the user is accepted. When the user inputs a URL to operation portion 105, a request to access the input URL is accepted. A URL may be accepted, for example, when the user designates a URL registered beforehand in "FAVORITE" or the like.

When the user inputs an operation to designate link information to operation portion 105, a request to access the URL included in the designated link information is accepted. Specifically, in a case where a Web page has already been displayed on display portion 103, when the user designates a portion in which link information is displayed in the displayed Web page, the operation to designate link information is accepted, and the request to access the URL included in the designated link information is accepted.

In the case where a Web page has already been displayed on display portion 103, a program included in the Web page may include a command to periodically transmit a request to ask for transmission of a new Web page in order to periodically update the Web page. The command is written, for example, with a JAVA (R) program, a JAVA (R) script, and the like. In this case, a request output by the task generated by CPU 111 executing the program included in the already-displayed Web page is accepted.

In step S02, it is determined whether the accepted request includes an instruction to open a new window. If it includes an instruction to open a new window, the process proceeds to step S09. If not, the process proceeds to step S03. In step S09, a browsing program is activated, and the process then proceeds to step S10. When a browsing program is activated, the URL included in the request accepted in step S01 is passed as an argument to the task that executes the activated browsing program. The task that executes the newly activated browsing program executes the same browsing program as shown in Fig. 8 and therefore accepts the URL input as an argument, in step S01.

On the other hand, in step S03, it is determined whether the request accepted in step S01 includes an instruction to open a new tab. If it includes an instruction to open a new tab, the process proceeds to step S04. If not, the process proceeds to step S05. In step S04, a new tab is generated and displayed on display portion 103. In this stage, there is no content to be displayed on the new tab, and an empty screen is thus displayed on display portion 103. For example, a message "loading now" may be displayed.

In step S05, a command corresponding to the request accepted in step S01 is transmitted. Communication I/F portion 112 is controlled such that a command is transmitted to a Web server that is a transmission destination defined by the request. Specifically, a GET command including the URL accepted in step S01 is transmitted to network 2 through communication I/F portion 112. Here, a case where the URL included in the GET command specifies Web server 7 will be described by way of example. If the URL included in the GET command specifies Web server 7, the GET command is received by Web server 7. Web server 7 which receives the GET command returns a Web page specified by the URL to MFP 100 that has transmitted the GET command. Communication I/F portion 112 then receives the Web page.

In step S06, the process waits until communication I/F portion 112 receives the Web page (NO in step S06). When the Web page is received (YES in step S06), the process proceeds to step S07.

In the next step S07, the received Web page is held. Specifically, the received Web page is stored into RAM 114 in association with the name of the tab. If a new tab is generated in step S04, the Web page is stored into RAM 114 in association with the name of the new tab. If a new tab is not generated in step S04, the Web page stored in RAM 114 in association with the name of the tab set as a display target on display portion 103 is overwritten with the received Web page.

In the next step S08, the received Web page is displayed on display portion 103, and the process then proceeds to step S10. If a new tab is newly generated in step S04, the Web page is displayed on the new tab. If a new tab is not generated, the Web page displayed on the tab set as a display target on display portion 103 is overwritten with the Web page received in step S06.

In the next step S10, it is determined whether an end instruction is accepted. It is determined whether an instruction to terminate the browsing process through the user's operation on touch panel 105A is accepted. The instruction to terminate the browsing process includes an operation of closing the window. If an end instruction is accepted (YES in step S10), the browsing process is terminated. If not (NO in step S10), the process returns to step S01.

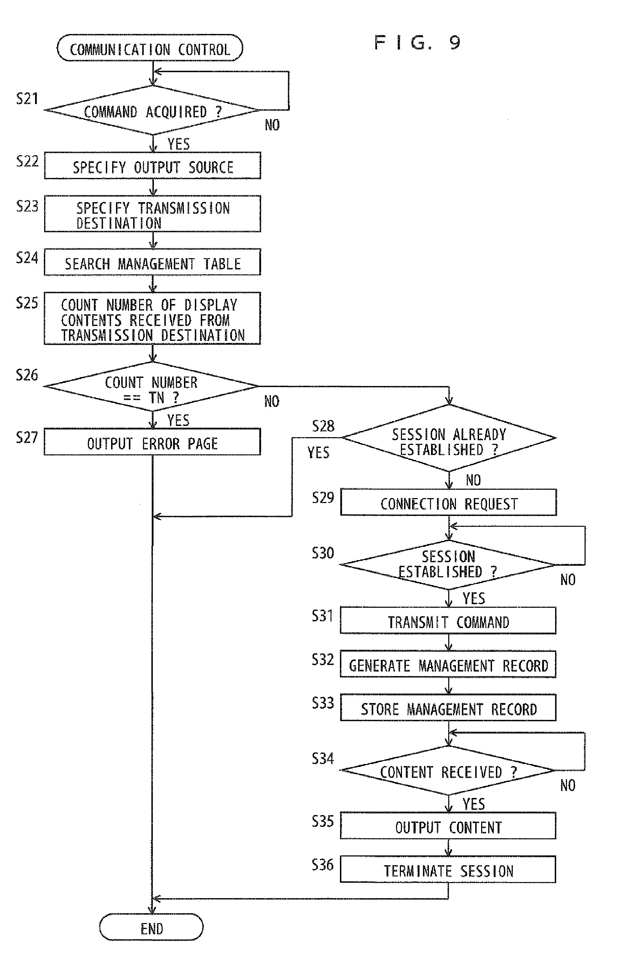

Fig. 9 is a flowchart showing an exemplary flow of the communication control process. The communication control process is a process executed by CPU 111 when CPU 111 of MFP 100 executes the communication control program stored in ROM 113, EEPROM 115, HDD 116, or CD-ROM 119A.

Referring to Fig. 9, CPU 111 determines whether a command is acquired. It is determined whether a command output by one of the first to N-th browsing portions 51-1 to 51-N is acquired. The process waits until a command is acquired (NO in step S21). If a command is acquired (YES in step S21), the process proceeds to step S22.

In step S22, an output source that has output the command is specified. Which of the first to N-th browsing portions 51-1 to 51-N has output the command acquired in step S21 is specified. Specifically, the task identification information for identifying the task that has output the command, among the first to N-th browsing portions 51-1 to 51-N, and the tab identification information of the tab set as a process target by the specified task are acquired.

In the next step S23, a transmission destination of the command acquired in step S21 is specified. The URL of the Web server as a transmission destination, of Web servers 7, 7A, is specified by extracting the URL included in the command acquired in step S21. Here, a case where Web server 7 is specified as a transmission destination will be described by way of example. In the next step S24, the number of display contents that have been received from Web server 7 that is the transmission destination specified in step S23 is counted. The display contents are contents held by one of the first to N-th browsing portions 51-1 to 51-N. Here, management table 99 stored in EEPROM 115 is searched, and all the management records in which the same URL as the URL of Web server 7 that is the transmission destination specified in step S23 is set in the item of server URL are extracted. Then, the number of the extracted management records is counted.

In step S26, it is determined whether the count number is a threshold value TN. If the count number is equal to threshold value TN, the process proceeds to step S27. If not, the process proceeds to step S28. In step S28, it is determined whether a session has been established. It is determined whether a session for communication has been established with Web server 7 that is the transmission destination specified in step S23. If a session has already been established with Web server 7 as the transmission destination, the process ends. If not, the process proceeds to step S29,

In step S27, an error page is output, and the process then ends. Specifically, a Web page including a predetermined error message is output to the task that is the output source specified in step S22, among the first to N-th browsing portions 51-1 to 51-N. For example, in a case where first browsing portion 51-1 outputs a command including the URL of Web server 7, a Web page including an error message is output to first browsing portion 51-1, in place of Web server 7, without transmitting the command to Web server 7. Therefore, the command is not transmitted to Web server 7, thereby reducing load on Web server 7.

On the other hand, in step S29, a connection request is transmitted to Web server 7 that is the transmission destination specified in step S23. In the next step S30, it is determined whether a session is established. The process waits until a session is established (NO in step S30). If a session is established (YES in step S30), the process proceeds to step S31. In step S31, the command acquired in step S21 is transmitted to Web server 7 that is the transmission destination specified in step S23, through communication I/F portion 112.

In the next step S32, a management record is generated. The generated management record includes the task identification information and tab identification information of the output source specified in step S22, and the URL of Web server 7 that is the transmission destination specified in step S23. Then, the generated management record is additionally stored into management table 99 in EEPROM 115 (step S33).

In the next step S34, it is determined whether a content is received from Web server 7 to which the command is transmitted in step S31. The process waits until a content is received (NO in step S34). If a content is received (YES in step S34), the process proceeds to step S35. In the next step S35, the received content is output to the task that is the output source specified in step S22. Then, in step S36, the session established in step S30 is terminated, and the process then ends.

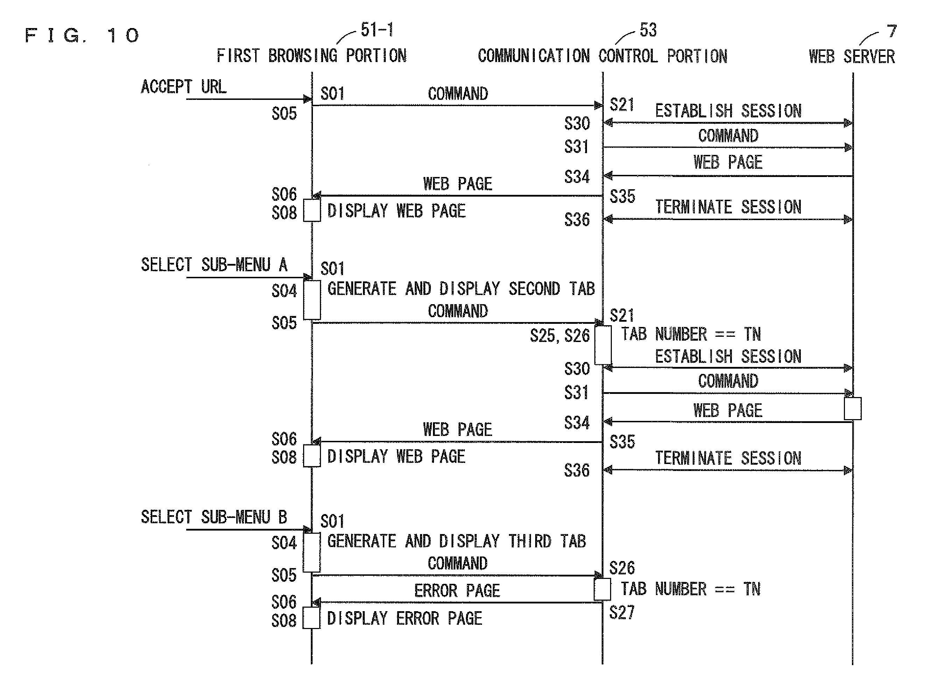

Fig. 10 is a first diagram showing an example of user's operations and a flow of processing. The same process as the process shown in the flowcharts in Fig. 8 and Fig. 9 is given the same reference numeral in Fig. 10. Fig. 10 shows the process executed in the task of the first browsing portion 51-1 implemented by CPU 111 of MFP 100 executing the browsing program, the process executed in the task of communication control portion 53 implemented by CPU 111 executing the communication control program, and the process executed in the server, in chronological order. Although not shown in Fig. 10, processes are executed in the tasks of the second to N-th browsing portions 51-2 to 51-N implemented by CPU 111 of MFP 100 executing the browsing program.

Referring to Fig. 10, when the user inputs a URL to MFP 100, the first browsing portion 51-1 accepts the URL as a request (step S01). The first browsing portion 51-1 outputs a command including the accepted URL to communication control portion 53 (step S05). Communication control portion 53 acquires the command (step S21), establishes a session with Web server 7 specified by the URL included in the command (step S30), and transmits the command to server 7 (step S31). Server 7 receiving the command returns a Web page. Then, communication control portion 53 receives the Web page transmitted by Web server 7 (step S34), outputs the received Web page to the first browsing portion 51-1 (step S35), and terminates the session with Web server 7 (step S36). When receiving the Web page (step S06), the first browsing portion 51-1 displays a first tab including the Web page on display portion 103 (step S08).

Next, when the user inputs to MFP 100 an instruction to select a sub-menu A included in the Web page displayed on display portion 103, the first browsing portion 51-1 accepts the selection of sub-menu A as a request (step S01). Then, a second tab is generated and displayed on display portion 103 (step S04). In this stage, since there exists no content to be displayed as the second tab, an empty second tab is displayed on display portion 103. The first browsing portion 51-1 outputs a command including the URL of sub-menu A to communication control portion 53 (step S05). Communication control portion 53 acquires the command (step S21), counts the number of tabs having the contents received from Web server 7 as display targets, and determines whether the number of tabs is equal to threshold value TN (steps S25, S26). Here, assuming that the number of tabs is smaller than threshold value TN, and in this case, communication control portion 53 establishes a session with Web server 7 specified by the URL included in the command (step S30) and transmits the command to Web server 7(step S31). Web server 7 receiving the command returns a Web page. Then, communication control portion 53 receives the Web page transmitted by Web server 7 (step S34), outputs the received Web page to the first browsing portion 51-1 (step S35), and terminates the session with the Web server 7 (step S36). When receiving the Web page (step S06), the first browsing portion 51-1 displays the second tab including the Web page on display portion 103 (step S08).

Furthermore, when the user inputs to MFP 100 an instruction to select sub-menu B included in the Web page displayed on display portion 103, the first browsing portion 51-1 accepts the selection of sub-menu B as a request (step S01). Then, a third tab is generated and displayed on display portion 103 (step S04). In this stage, since there exists no content to be displayed as the third tab, an empty third tab is displayed on display portion 103. The first browsing portion 51-1 outputs a command including the URL of sub-menu B to communication control portion 53 (step S05).

Communication control portion 53 acquires the command (step S21), counts the number of tabs having the contents received from Web server 7 as display targets, and determines whether the number of tabs is equal to threshold value TN (steps S25, S26). Here, assuming that the number of tabs is equal to threshold value TN, and in this case, communication control portion 53 outputs an error page to the first browsing portion 51-1 (step S27). When the error page is input (step S06), the first browsing portion 51-1 displays the third tab including the error page on display portion 103 (step S08).

If the number of tabs having the contents received from Web server 7 as display targets is equal to threshold value TN, the command is not transmitted to server 7, thereby reducing load on Web server 7.

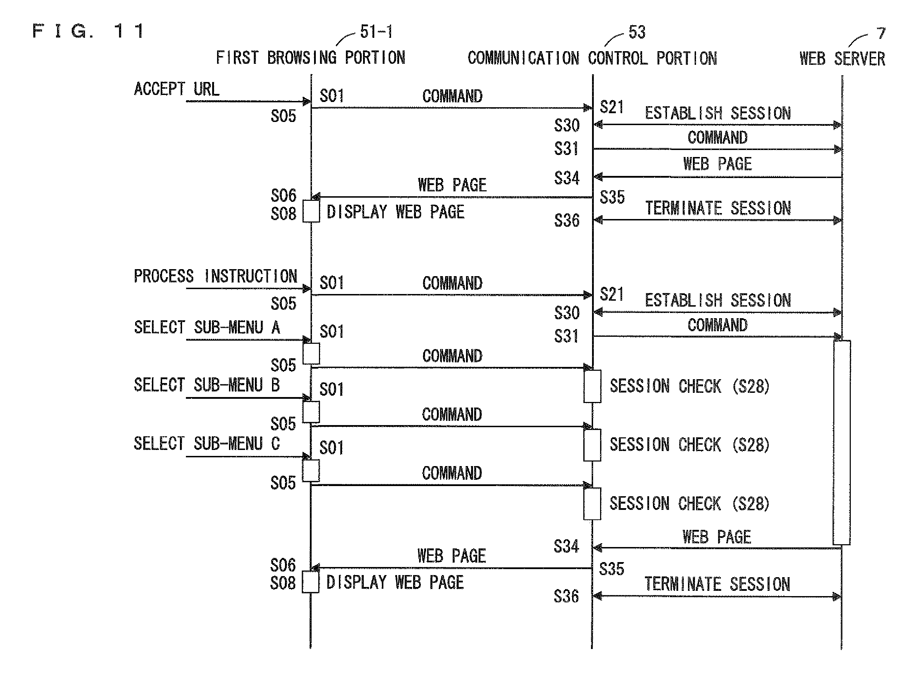

Fig. 11 is a second diagram showing an example of user's operations and a flow of processing. The same process as the process shown in the flowcharts in Fig. 8 and Fig. 9 is given the same reference numeral in Fig. 11. Fig. 11 shows the process executed in the task of the first browsing portion 51-1 implemented by CPU 111 of MFP 100 executing the browsing program, the process executed in the task of communication control portion 53 implemented by CPU 111 executing the communication control program, and the process executed in the server, in chronological order. Although not shown in Fig. 11, processes are executed in the tasks of the second to N-th browsing portions 51-2 to 51-N implemented by CPU 111 of MFP 100 executing the browsing program.

Referring to Fig. 11, when the user inputs a URL to MFP 100, the first browsing portion 51-1 accepts the URL as a request (step S01). The first browsing portion 51-1 outputs a command including the accepted URL to communication control portion 53 (step S05). Communication control portion 53 acquires the command (step S21), establishes a session with Web server 7 specified by the URL included in the command (step S30), and transmits the command to Web server 7 (step S31). Web server 7 receiving the command returns a Web page. Then, communication control portion 53 receives the Web page transmitted by Web server 7 (step S34), outputs the received Web page to the first browsing portion 51-1 (step S35), and terminates the session with Web server 7 (step S36). When receiving the Web page (step S06), the first browsing portion 51-1 displays a first tab including the Web page on display portion 103 (step S08).

Next, when the user designates a button associated with an instruction on a process included in the Web page displayed on display portion 103, the first browsing portion 51-1 accepts the instruction to execute the process as a request (step S01). The button associated with the instruction on a process included in the Web page is associated with a CGI command. The first browsing portion 51-1 outputs the CGI command to communication control portion 53 (step S05). Communication control portion 53 acquires the CGI command (step S21), establishes a session with Web server 7 specified by the URL included in the CGI command (step S30), and transmits the CGI command to Web server 7 (step S31). Web server 7 receiving the CGI command executes the CGI command and returns the process result. Here, it is assumed that a prescribed time is required for the CGI command.

Next, when the user inputs to MFP 100 an instruction to select sub-menu A, the first browsing portion 51-1 accepts the selection of sub-menu A as a request (step S01). The first browsing portion 51-1 outputs a command including the URL of sub-menu A to communication control portion 53 (step S05). Communication control portion 53 acquires the command (step S21) and determines whether a session is established with Web server 7 specified by the URL included in the command (step S28). Here, the previous process of transmitting the CGI command is being executed in Web server 7. Therefore, communication control portion 53 determines that a session is established, and discards the command including the URL of sub-menu A acquired from the first browsing portion 51-1.

Furthermore, when the user inputs to MFP 100 an instruction to select sub-menu B, the first browsing portion 51-1 accepts the selection of sub-menu B as a request (step S01). Then, the first browsing portion 51-1 outputs a command including the URL of sub-menu B to communication control portion 53 (step S05). Communication control portion 53 acquires the command (step S21) and determines whether a session is established with Web server 7 specified by the URL included in the command (step S28). Here, the previous process of transmitting the CGI command is being executed in Web server 7. Therefore, communication control portion 53 determines that a session is established, and discards the command including the URL of sub-menu B acquired from the first browsing portion 51-1.

Furthermore, when the user inputs to MFP 100 an instruction to select sub-menu C, the first browsing portion 51-1 accepts the selection of sub-menu C as a request (step S01). Then, the first browsing portion 51-1 outputs a command including the URL of sub-menu C to communication control portion 53 (step S05). Communication control portion 53 acquires the command (step S21) and determines whether a session is established with Web server 7 specified by the URL included in the command (step S28). Here, the previous process of transmitting the CGI command is being executed in Web server 7. Therefore, communication control portion 53 determines that a session is established, and discards the command including the URL of sub-menu C acquired from the first browsing portion 51-1.

Web server 7 receiving the CGI command transmits a Web page, which is the process result, upon completion of execution of the CGI command. Therefore, communication control portion 53 receives the Web page transmitted by Web server 7 (step S34), outputs the received Web page to the first browsing portion 51-1 (step S35), and terminates the session with the Web server (step S36). Upon receiving the Web page (step S06), the first browsing portion 51-1 displays the Web page on display portion 103 (step S08).

The command is not transmitted to Web server 7 while the session for communication is being established with Web server 7, thereby reducing load on Web server 7.

As described above, MFP 100 in the present embodiment includes the first to N-th browsing portions 51-1 to 51-N receiving a content from one of Web servers 7, 7A and displaying the received content, command acquisition portion 55 acquiring a command output by each of the first to N-th browsing portions 51-1 to 51-N to be transmitted to one of Web servers 7, 7A, command transmission portion 59 transmitting the acquired command to a server that is a transmission destination of the command, and restriction portion 57 restricting transmission of the command by command transmission portion 59, based on the status of contents previously received from the server to which the acquired command is transmitted, or the status of communication with the server. Restriction portion 57 restricts transmission of the command based on the status of contents previously received from Web servers 7, 7A, or the status of communication with Web servers 7, 7A, thereby reducing load on Web server 7, 7A.

If the number of Web pages held by each of the first to N-th browsing portion 51-1 to 51-N and received from the same transmission source as the transmission destination of the command reaches the prescribed threshold value TN at a moment when the command is acquired, then restriction portion 57 prohibits transmission of the command. Therefore, the number of Web pages received from the same Web server and held in a displayable manner is restricted, whereby load on the Web server can be reduced.

On the other hand, if a session for communication with the Web server that is the transmission destination of the acquired command has already been established at a moment when the command is acquired, then restriction portion 57 restricts transmission of the command. Therefore, the number of sessions established with the same Web server is restricted, whereby load on the Web server can be reduced.

In particular, when the Web server is included in MFP 100, the degree of each restriction can be controlled depending on its own load.

### <Second Embodiment>

MFP 100 in the first embodiment is configured such that CPU 111 forms a plurality of tasks executing browsing programs, whereas MFP 100 in the second embodiment is configured such that CPU 111A executes a single browsing program. In the following, information processing system 1 in the second embodiment will be described mainly focusing on differences from information processing system 1 in the first embodiment.

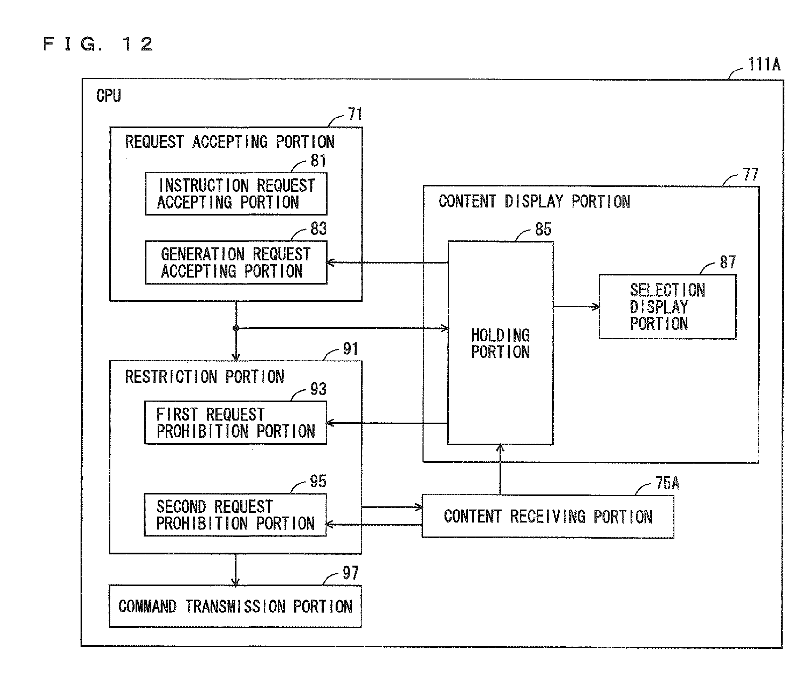

Fig. 12 is a block diagram showing an overall function of the CPU of the MFP in the second embodiment and information stored in the EEPROM. The functions of CPU 111A shown in Fig. 12 are implemented by CPU 111A executing a browsing program stored in ROM 113, EEPROM 115, HDD 116, or CD-ROM 119A.

Referring to Fig. 12, the functions of CPU 111A differ from those shown in Fig. 6 in that a restriction portion 91 is added and in that command output portion 73 and content receiving portion 75 are changed to a command transmission portion 97 and a content receiving portion 75A, respectively. The other functions are the same as those shown in Fig. 6, and therefore, the differences will be mainly described.

Command transmission portion 97 transmits a command defined by a request accepted by request accepting portion 71 to a Web server that is a transmission destination defined by the request, on condition that a session prohibition signal or a transmission prohibition signal is not input from restriction portion 91 described below.

Restriction portion 91 receives a request output by request accepting portion 71 in response to the request being accepted. The request includes a request to access a URL input by the user, a request to access a URL included in link information designated by the user, and a request output by a task generated by CPU 111A executing a program included in a Web page.

Restriction portion 91 includes a first request prohibition portion 93 and a second request prohibition portion 95. First request prohibition portion 93 prohibits command transmission portion 97 from transmitting a command to a Web server, if the number of contents that have already been downloaded and displayed from the same Web server as the Web server that is a transmission destination specified by the accepted request reaches a prescribed threshold value at a moment when the request is accepted by request accepting portion 71. In other words, when Web pages are displayed on a plurality of tabs, the number of Web pages downloaded from the Web server that is a transmission destination specified by the request, of the plurality of displayed Web pages, is compared with the threshold value. First request prohibition portion 93 refers to the Web page for each tab held by holding portion 85 and counts the number of contents that have already been downloaded and displayed from the same Web server as the Web server that is a transmission destination specified by the accepted request.

Second request prohibition portion 95 prohibits command transmission portion 97 from transmitting a command to a Web server, based on a status of communication with the Web server that is a transmission destination defined by the request input from request accepting portion 71 at a moment when the request is input from request accepting portion 71. Specifically, second request prohibition portion 95 prohibits command transmission portion 97 from transmitting a command to a Web server, if a session for communication has already been established with the Web server that is a transmission destination of the command defined by the request input from request accepting portion 71. Second request prohibition portion 95 acquires, from content receiving portion 75A, information for specifying the Web server with which content receiving portion 75A is establishing a session for communication.

Restriction portion 91 outputs an error page to content receiving portion 75A, in place of the Web server that is the transmission destination defined by the request input from request accepting portion 71, if one of first request prohibition portion 93 and second request prohibition portion 95 prohibits transmitting a command to the Web server. The command is not transmitted to the Web server that is a transmission destination defined by the request input from request accepting portion 71, thereby reducing load on the Web server.

Restriction portion 91 outputs the request input from request accepting portion 71 to command transmission portion 97, if neither first request prohibition portion 93 nor second request prohibition portion 95 prohibits transmitting a command to the Web server.

Command transmission portion 97 transmits a command defined by a request to the Web server that is a transmission destination defined by the request, in response to the request input from restriction portion 91. Specifically, command transmission portion 97 establishes a session for communication with a Web server that is a transmission destination defined by a request and transmits a command defined by the request through communication I/F portion 112 during the established session.

Content receiving portion 75A outputs an error page to content display portion 77 if the error page is input from restriction portion 91.

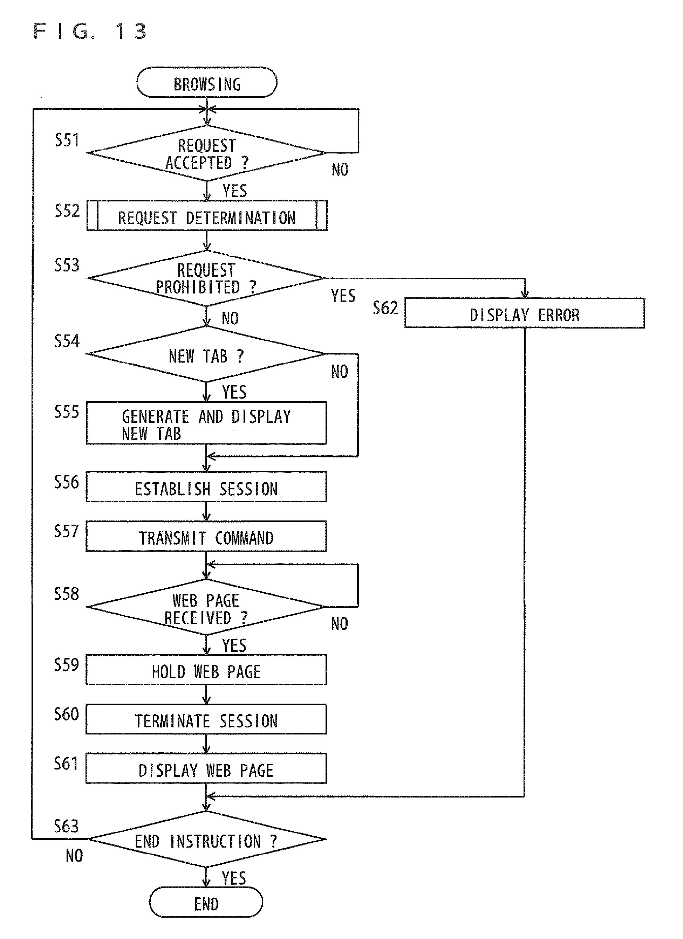

Fig. 13 is a flowchart showing an exemplary flow of a browsing process in the second embodiment. The browsing process in the second embodiment is a process executed by CPU 11 1A when CPU 111A of MFP 100 executes a browsing program stored in ROM 113, EEPROM 115, HDD 116, or CD-ROM 119A.

Referring to Fig. 13, CPU 111A determines whether a request is accepted (step S51). The process waits until a request is accepted (NO in step S51). If a request is accepted (YES in step S51), the process proceeds to step S52. When the user inputs a URL to operation portion 105, a request to access the input URL is accepted. When the user inputs an operation to designate link information to operation portion 105, a request to access the URL included in the designated link information is accepted. When a Web page has already been displayed on display portion 103 and when a program included in the Web page includes a command to periodically transmit a request to ask for transmission of a new Web page in order to periodically update the Web page, a request output by the task generated by CPU 111A executing the program included in the already displayed Web page is accepted.

In step S52, a request determination process is executed. The request determination process, which will be detailed later, is a process of determining whether the accepted request is prohibited. In step S53, the process branches off depending on the result of the request determination process. If the result of the request determination process indicates request prohibited, the process proceeds to step S62. If not, the process proceeds to step S54. In step S62, an error page is displayed on display portion 103, and the process then proceeds to step S63. The Web page displayed on the tab set as a display target on display portion 103 is overwritten with an error page. The error page includes, for example, a message "Please reduce the number of opened tabs" or a message "Please do not designate the same button in succession." The user thus becomes aware that the user is requested to perform such an operation that does not impose load on the Web server.

In step S54, it is determined whether the request accepted in step S51 includes an instruction to open a new tab. If it includes an instruction to open a new tab, the process proceeds to step S55. If not, the process proceeds to step S56. In step S55, a new tab is generated and displayed on display portion 103. In this stage, there exists no content to be displayed on the new tab, and therefore, an empty screen is displayed on display portion 103. For example, a message "loading now" may be displayed.

In step S56, a session for communication is established with the Web server specified by the URL included in the request accepted in step S51. Then, a command defined by the request accepted in step S51 is transmitted. Communication I/F portion 112 is controlled such that a command is transmitted to the Web server that is a transmission destination defined by the request. Specifically, a GET command including the URL included in the request accepted in step S51 is transmitted to network 2 through communication I/F portion 112. Here, a case where the URL included in the GET command specifies Web server 7 will be described by way of example. When the URL included in the GET command specifies Web server 7, the GET command is received by Web server 7. Web server 7 receiving the GET command returns a Web page specified by the URL to MFP 100 that has transmitted the GET command. Therefore, communication I/F portion 112 receives the Web page.

In step S58, the process waits until communication I/F portion 112 receives the Web page (NO in step S58). When the Web page is received (YES in step S58), the process proceeds to step S59.

In the next step S59, the received Web page is held. Specifically, the received Web page is stored into RAM 114 in association with the name of the tab. If a new tab is generated in step S55, the Web page is associated with the name of the new tab and stored into RAM 114. If a new tab is not generated in step S55, the Web page stored in RAM 114 in association with the name of the tab set as a display target on display portion 103 is overwritten with the received Web page.

In the next step S60, the session established in step S57 is terminated. Then, in step S61, the received Web page is displayed on display portion 103. The process then proceeds to step S63. If a new tab is newly generated in step S55, the Web page is displayed on the new tab. If a new tab is not generated, the Web page displayed on the tab set as a display target on display portion 103 is overwritten with the Web page received in step S58.

In the next step S63, it is determined whether an end instruction is accepted. It is determined whether an instruction to terminate the browsing process through the user's operation on touch panel 105A is accepted. The instruction to terminate the browsing process includes an operation of closing a window. If an end instruction is accepted (YES in step S63), the browsing process is terminated. If not (NO in step S63), the process returns to step S51.

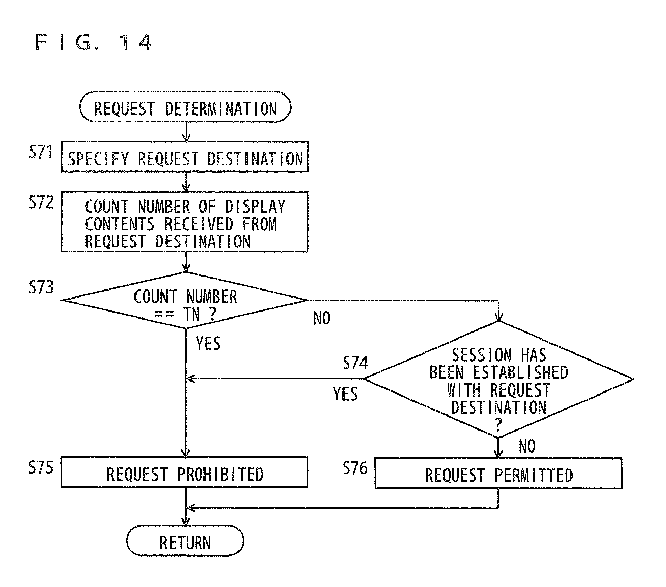

Fig. 14 is a flowchart showing an exemplary flow of a request determination process. The request determination process is a process executed in step S52 in Fig. 13. Referring to Fig. 14, a request destination is specified (step S71). The URL of the Web server to which a request is made is specified by extracting the URL included in the accepted request.

In the next step S72, the number of display contents that have been received from the Web server that is the request destination specified in step S71 is counted. The display content is a content stored in RAM 114 as a result of execution of the browsing process. Here, the number of contents stored in RAM 114 in association with the names of the tabs is counted.

In the next step S73, it is determined whether the count number is equal to threshold value TN. If the count number is equal to threshold number TN, the process proceeds to step S75. If not, the process proceeds to step S74. In step S74, it is determined whether a session has already been established. It is determined whether a session for communication has been established with the Web server that is the request destination specified in step S71. If a session has already been established with the Web server that is the request destination, the process proceeds to step S75. If not, the process proceeds to step S76.

In step S75, request prohibited is set in the determination result, and the process returns to the browsing process. In step S76, request permitted is set in the determination result, and the process returns to the browsing process.

MFP 100 in the second embodiment includes restriction portion 91 restricting a command to be transmitted to a Web server, based on the status of contents previously received from the Web server that is a transmission destination defined by the request accepted from the user, or the status of communication with the Web server. Therefore, load on the Web server that is the request destination can be reduced.

Restriction portion 91 prohibits transmission of a command if the number of Web pages received from the same Web server as the Web server that is the transmission destination defined by the accepted request, of the Web pages held in a displayable manner, reaches the prescribed threshold value TN at a moment when the request is accepted. Therefore, the number of Web pages received from the same Web server and held in a displayable manner is restricted, thereby reducing load on the Web server.

Furthermore, restriction portion 91 prohibits transmission of a command if a session for communicating with the Web server that is a transmission destination of the accepted request has already been established at a moment when the request is accepted. Therefore, the number of sessions established with the same Web server is restricted, thereby reducing load on the Web server.

In the foregoing embodiments, MFP 100 has been described as an example of the image forming apparatus. However, it is needless to say that the present invention can be understood as a communication control method for allowing MFP 100 to execute the processes shown in Fig. 8 and Fig. 9 or Fig. 13 and Fig. 14, or as a communication control program for causing a computer to execute the communication control method.

Although the present invention has been described and illustrated in detail, it is clearly understood that the same is by way of illustration and example only and is not to be taken by way of limitation, the spirit and scope of the present invention being limited only by the terms of the appended claims.

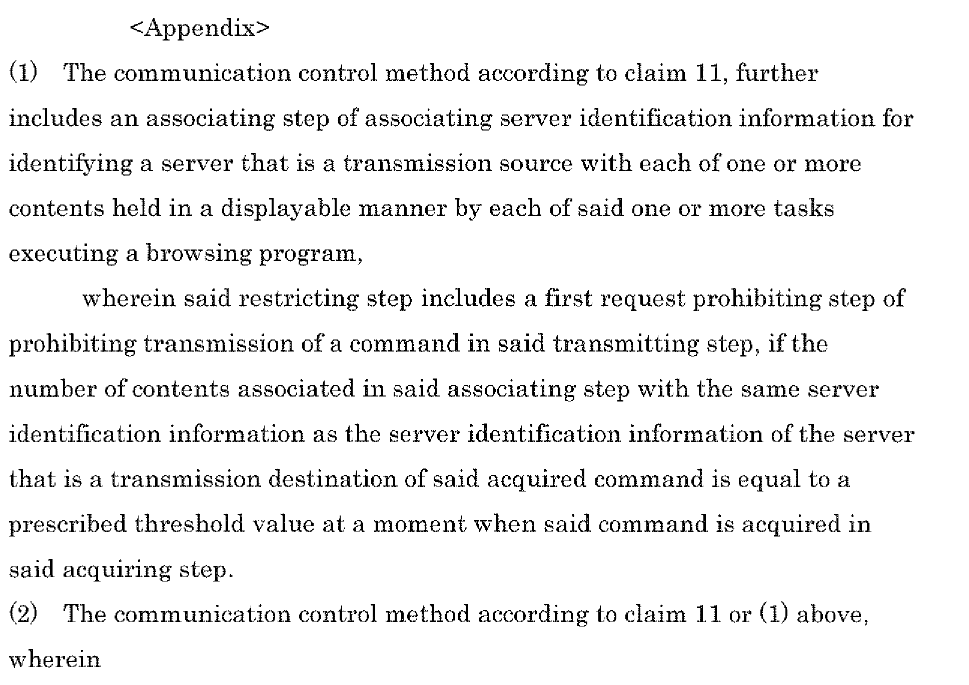

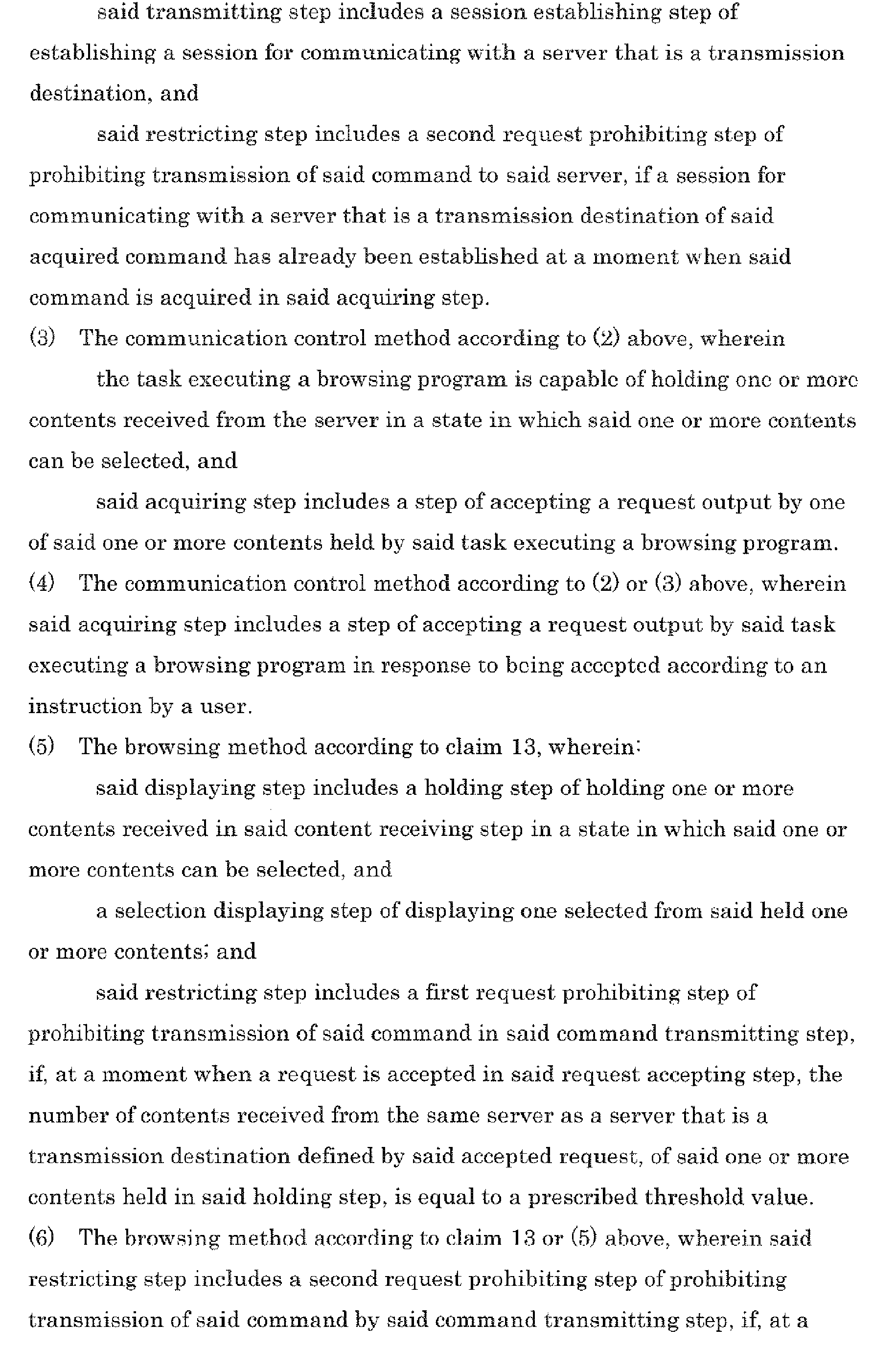

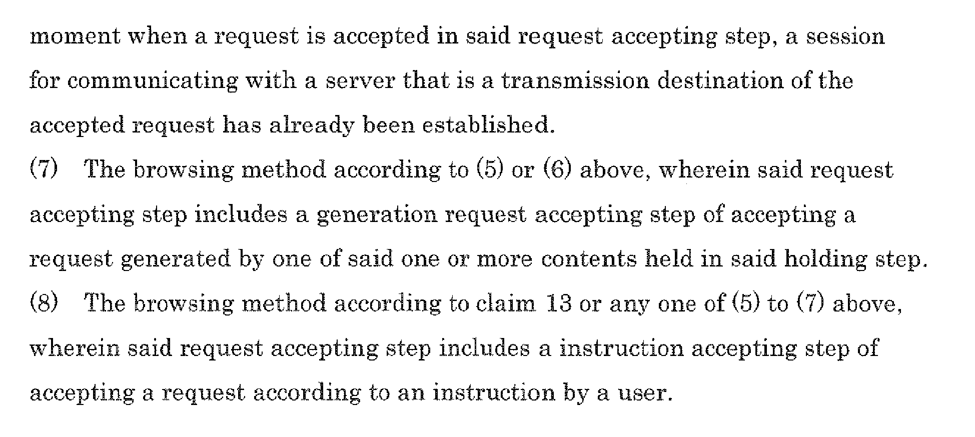

## Claims

1. An image forming apparatus (100) comprising;
one or more browsing means (51-1 to 51-N) to receive a content from a server (200) connected to a network (2) and to display the received content;
a command acquisition means (55) to acquire a command output by each of said one or more browsing means to be transmitted to a server;
a transmission means (59) to transmit said acquired command to a server that is a transmission destination of said command; and
a restriction means (57) to restrict transmission of said command by said transmission means, based on a status of contents previously received from said server to which the acquired command is transmitted, or a status of communication with the server.

2. The image forming apparatus according to claim 1, further comprising an association means (61) to associate server identification information for identifying a server that is a transmission source with each of one or more contents previously received from a server and held in a displayable manner by each of said one or more browsing means,
wherein said restriction means includes a first request prohibition means (65) to prohibit transmission of a command by said transmission means, if the number of contents associated by said association means with the same server identification information as the server identification information of the server that is a transmission destination of said acquired command is equal to a prescribed threshold value at a moment when said command is acquired by said acquisition means.

3. The image forming apparatus according to any one of claims 1 or 2,
wherein
said transmission means further includes a session establishing means (67) to establish a session for communicating with a server that is a transmission destination of said acquired command, and
said restriction means includes a second request prohibition means (63) to prohibit transmission of a command by said transmission means, if a session for communicating with a server that is a transmission destination of said acquired command has already been established at a moment when said command is acquired by said acquisition means.

4. The image forming apparatus according to claim 3, wherein
each of said one or more browsing means includes a request accepting means (71) to accept a request,
a command output means (73) to output, in response to said request being accepted, a command corresponding to said accepted request to a server that is a transmission destination defined by said accepted request,
a content receiving means (75) to receive a content returned by said server executing said output command, and
a content display means (77) to display said received content,
said content display means includes
a holding means (85) to hold one or more contents received by said content receiving portion in a state in which said one or more contents can be selected, and
a selection display means (87) to display one selected from said held one or more contents, and
said request accepting means includes a generation request accepting means (83) to accept a request generated by one of said one or more contents held by said holding means.

5. The image forming apparatus according to claim 3, wherein
each of said one or more browsing means includes a request accepting means (71) to accept a request,
a command output means (73) to output, in response to said request being accepted, a command corresponding to said accepted request to a server that is a transmission destination defined by said accepted request,
a content receiving means (75) to receive a content returned by said server executing said output command, and
a content display means (77) to display said received content, and
said request accepting means includes an instruction accepting means (81) to accept a request according to an instruction by a user.

6. An image forming apparatus comprising:
a request accepting means (71) to accept a request;
a command transmission means (97) to transmit, in response to said request being accepted, a command corresponding to said accepted request to a server that is a transmission destination defined by said accepted request;
a content receiving means (75A) to receive a content returned by said server executing said command;
a content display means (77) to display said received content; and
a restriction means (91) to restrict transmission of said command by said command transmission means, based on a status of contents previously received from said server that is a transmission destination defined by said accepted request, or a status of communication with the server.

7. The image forming apparatus according to claim 6, wherein
said content display means includes
a holding means (85) to hold one or more contents received by said content receiving means in a state in which said one or more contents can be selected, and
a selection display means (87) to display one selected from said held one or more contents, and
said restriction means includes a first request prohibition means (93) to prohibit transmission of said command by said command transmission means, if, at a moment when a request is accepted by said request accepting means, the number of contents received from the same server as a server that is a transmission destination defined by said accepted request, of said one or more contents held by said holding means, is equal to a prescribed threshold value.

8. The image forming apparatus according to claims 6 or 7, wherein said restriction means includes a second request prohibition means (95) to prohibit transmission of said command by said command transmission means, if, at a moment when a request is accepted by said request accepting means, a session for communicating with a server that is a transmission destination of the accepted request has already been established.

9. The image forming apparatus according to claims 7 or 8, wherein said request accepting means includes a generation request accepting means (83) to accept a request generated by one of said one or more contents held by said holding means.

10. The image forming apparatus according to any one of claims 6-9,
wherein said request accepting means includes an instruction accepting means (81) to accept a request according to an instruction by a user.

11. A communication control method executed in an image forming apparatus (100) capable of executing a browsing program, comprising the steps of:
acquiring (S21) a command output by a task executing the browsing program to be transmitted to a server connected to a network;
transmitting (S31) said acquired command to a server that is a transmission destination of the command; and
restricting (S26) transmission of said acquired command in said step of transmitting, based on a status of contents previously received from said server to which said acquired command is transmitted, or a status of communication with the server.

12. A computer-readable recording medium (119A) encoded with a communication control program executed in a computer (111) which controls an image forming apparatus (100), said communication control program causing said computer to execute the steps of:
acquiring (S21) a command output by a task executing a browsing program to be transmitted to a server connected to a network;
transmitting (S31) said acquired command to a server that is a transmission destination of the command; and
restricting (S26) transmission of said acquired command in said step of transmitting, based on a status of contents previously received from said server to which said acquired command is transmitted, or a status of communication with the server.

13. A browsing method executed in an image forming apparatus (100) connected to a network, comprising the steps of:
accepting (S51) a request;
in response to said request being accepted, transmitting (S57) a command corresponding to said accepted request to a server that is a transmission destination defined by said accepted request;
receiving (S58) a content returned by said server executing said command;
displaying (S61) said received content; and
restricting (S73, S74) transmission of said command in said step of transmitting a command, based on a status of contents previously received from said server that is a transmission destination defined by said accepted request, or a status of communication with the server.

14. A computer-readable recording medium (119A) encoded with a browsing program executed in a computer (111) which controls an image forming apparatus (100) connected to a network, said browsing program causing said computer to execute the steps of:
accepting (S51) a request;
in response to said request being accepted, transmitting (S57) a command corresponding to said accepted request to a server that is a transmission destination defined by said accepted request;
receiving (S58) a content returned by said server executing said command;
displaying (S61) said received content; and
restricting (S73, S74) transmission of said command in said step of transmitting a command, based on a status of contents previously received from said server that is a transmission destination defined by said accepted request, or a status of communication with the server.
